(19) Europäisches Patentamt
European Patent Office
Office européen des brevets

(11) **EP 2 882 087 B1**

(12) **FASCICULE DE BREVET EUROPEEN**

(45) Date de publication et mention
de la délivrance du brevet:
**19.09.2018 Bulletin 2018/38**

(51) Int Cl.:
***H02M 3/158*** *(2006.01)*     *H02M 1/00* *(2006.01)*

(21) Numéro de dépôt: **14192939.8**

(22) Date de dépôt: **13.11.2014**

(54) **Convertisseur DC-DC à fonctionnement en mode discontinu**

Gleichstrom-Gleichstrom-Wandler in diskontinuierlichem Betriebsmodus

DC-DC converter with operation in discontinuous mode

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.12.2013 EP 13195405**

(43) Date de publication de la demande:
**10.06.2015 Bulletin 2015/24**

(73) Titulaire: **EM Microelectronic-Marin SA**
**2074 Marin (CH)**

(72) Inventeurs:
- **Saby, Jérôme**
  **2000 Neuchâtel (CH)**
- **Theoduloz, Yves**
  **1400 Yverdon (CH)**

(74) Mandataire: **Giraud, Eric et al**
**ICB**
**Ingénieurs Conseils en Brevets SA**
**Faubourg de l'Hôpital 3**
**2001 Neuchâtel (CH)**

(56) Documents cités:
**EP-A1- 1 632 827**     **US-A- 6 151 233**
**US-A1- 2009 243 577**

EP 2 882 087 B1

## Description

L'invention concerne un convertisseur DC-DC fonctionnant en mode discontinu. Le convertisseur DC-DC comprend une inductance coopérant avec un premier commutateur et un second commutateur fonctionnant en alternance, afin de fournir une tension de sortie d'un niveau supérieur, égal ou inférieur au niveau d'une tension d'entrée. Le convertisseur comprend également une unité de gestion de commutation des commutateurs pour déterminer un premier temps d'enclenchement du premier commutateur durant lequel un courant croissant traverse l'inductance, et un second temps d'enclenchement du second commutateur durant lequel un courant décroissant traverse l'inductance.

L'invention concerne également un procédé de mise en action d'un convertisseur DC-DC.

Un convertisseur de tension DC-DC permet de convertir une tension continue d'entrée, qui peut être une tension d'une source de tension continue, en une tension continue de sortie par l'intermédiaire d'une inductance entre l'entrée et la sortie comme élément réactif. Comme la source de tension peut être une batterie, qui se décharge au cours du temps, le convertisseur peut être parfois prévu pour garantir également une tension de sortie à une valeur déterminée indépendamment d'une chute de tension d'entrée.

Différents types de convertisseur DC-DC inductif peuvent être utilisés. Un premier type de convertisseur DC-DC est défini comme un convertisseur Buck pour fournir une tension de sortie de valeur inférieure à la valeur de la tension d'entrée. Un second type de convertisseur DC-DC est défini comme un convertisseur Boost pour fournir une tension de sortie de valeur supérieure à la valeur de la tension d'entrée. Un troisième type de convertisseur DC-DC peut combiner un convertisseur Buck avec un convertisseur Boost pour élever ou abaisser la tension de sortie.

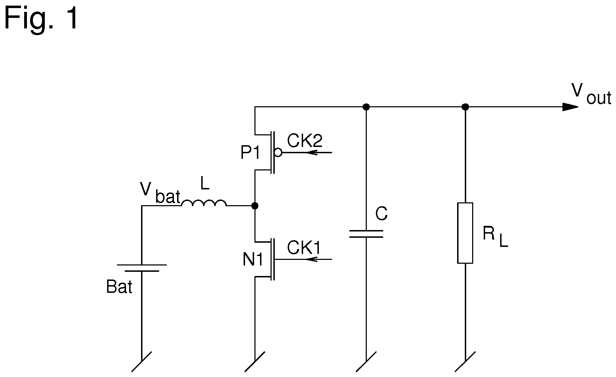

A la figure 1, il est représenté un convertisseur DC-DC inductif, qui est un convertisseur Boost généralement utilisé dans des circuits électroniques à faible consommation, alimentés par une batterie de petite dimension. Le convertisseur DC-DC comprend une inductance L comme élément réactif, un transistor PMOS P1 et un transistor NMOS N1, qui agissent comme des interrupteurs ou commutateurs. Les transistors PMOS P1 et NMOS N1 sont reliés en série. L'inductance L est disposée entre une borne positive Vbat d'une source de tension continue Bat, et un noeud de connexion des bornes de drain des transistors P1 et N1. La borne de source du transistor N1 est reliée à une borne de masse, alors que la borne de source du transistor P1 est reliée à une borne de sortie Vout, où un filtrage est opéré par le condensateur C mis en parallèle avec une résistance de charge $R_L$.

Les transistors P1 et N1 sont commandés de manière alternative chacun par un signal de commande respectif CK1 et CK2 sur leur borne de grille respective. Le signal de commande CK1 définit une première phase de commande du convertisseur, alors que le signal de commande CK2 définit une seconde phase de commande du convertisseur. Pendant une première période de temps déterminée, le signal de commande CK1 est à l'état haut pour rendre conducteur le transistor NMOS N1. Pendant une seconde période de temps déterminée successive à la première période de temps, le signal de commande CK2 est à l'état bas pour rendre conducteur le transistor PMOS P1.

Durant la première période de temps, le courant dans l'inductance L croît linéairement, alors que durant la seconde période de temps, le courant dans l'inductance L décroît linéairement pour arriver à zéro dans un cas idéal. Si au terme de la seconde période de temps, le courant à travers l'inductance n'est pas nul, une adaptation de la seconde période de temps doit être effectuée. Cette adaptation de la seconde période de temps est généralement nécessaire pour un convertisseur DC-DC fonctionnant en mode discontinu. Elle nécessite parfois au moins un comparateur rapide, qui engendre une forte consommation.

Dans le brevet EP 2 104 213 B1, il est décrit un procédé d'asservissement d'un convertisseur DC-DC fonctionnant en mode discontinu. La durée de la seconde période de temps, pendant laquelle le courant dans l'inductance décroît, est contrôlée pour que le courant soit nul au terme de la seconde période de temps. Le signe de la surtension générée par l'inductance lors de la commutation au terme de la seconde période de temps permet d'ajuster la durée de la seconde période de temps. Cependant avec un tel principe d'ajustement de la seconde période de temps par le contrôle de surtensions, il est nécessaire d'avoir des composants électroniques rapides, ce qui engendre une consommation importante constituant un inconvénient.

Dans le brevet US 6 151 233, il est décrit un convertisseur DC-DC dans lequel un premier courant est fourni pour charger un condensateur pendant un premier temps d'enclenchement et un deuxième courant est fourni pour décharger le condensateur jusqu'à un seuil de tension pour déterminer un deuxième temps d'enclenchement.

L'invention a donc pour but de pallier les inconvénients de l'état de la technique en fournissant un convertisseur DC-DC fonctionnant en mode discontinu, qui permet facilement d'ajuster les temps de croissance et décroissance du courant à travers l'inductance de manière à avoir un courant nul au terme d'une seconde période de temps de décroissance du courant dans l'inductance.

A cet effet, l'invention concerne un convertisseur DC-DC à fonctionnement en mode discontinu cité ci-devant, qui comprend les caractéristiques définies dans les revendications indépendantes 1 et 2.

Des formes d'exécution particulière du convertisseur DC-DC sont définies dans les revendications dépendantes 3 à 13.

Un avantage du convertisseur DC-DC selon l'invention réside dans le fait qu'il comprend des moyens pour déterminer par calcul la durée de la seconde période de temps sur la base de la détermination de la première période de temps, afin d'avoir un courant nul à travers l'inductance au terme de la seconde période de temps.

Avantageusement, il est effectué une adaptation analogique des temps de commutation des commutateurs ou interrupteurs du convertisseur DC-DC. Cette adaptation est opérée par une unité de gestion de commutation de manière simple. Aucun traitement numérique avec un cadencement à haute fréquence n'est nécessaire, ce qui réduit la consommation d'un tel convertisseur DC-DC.

Avantageusement le premier temps d'enclenchement ou de fermeture du premier commutateur lié à l'inductance dans une première phase d'asservissement du convertisseur DC-DC, est déterminé sur la base de la charge d'un premier condensateur. La charge du premier condensateur est effectuée par un premier courant provenant d'un miroir de courant et généré par une résistance alimenté par la différence de tension entre la tension de sortie et la tension d'entrée. Le premier condensateur se charge jusqu'à un premier seuil de tension, qui peut avantageusement être la différence de tension entre la tension de sortie et la tension d'entrée. Ce premier temps d'enclenchement peut ainsi être défini par la valeur résistive de la résistance multipliée par la valeur capacitive du premier condensateur.

Avantageusement le second temps d'enclenchement du second commutateur lié à l'inductance dans une seconde phase d'asservissement du convertisseur DC-DC, est déterminé sur la base de la détermination du premier temps d'enclenchement. Un second condensateur est chargé par un second courant provenant du miroir de courant. Ce second condensateur se charge jusqu'à un second seuil de tension, qui est de préférence la tension d'entrée. Dans ces conditions, si les courants à travers la résistance et pour charger les condensateurs sont identiques, il est possible de déterminer facilement le second temps d'enclenchement sur la base du premier temps d'enclenchement.

A cet effet, l'invention concerne également un procédé de mise en action d'un convertisseur DC-DC, qui comprend les caractéristiques de la revendication indépendante 14.

Des étapes particulières du procédé sont définies dans les revendications dépendantes 15 et 16.

Les buts, avantages et caractéristiques du convertisseur DC-DC fonctionnant en mode discontinu, et du procédé de mise en action du convertisseur apparaîtront mieux dans la description suivante sur la base d'au moins une forme d'exécution du convertisseur non limitative illustrée par les dessins sur lesquels :

la figure 1 déjà citée représente un convertisseur DC-DC de type Boost de l'état de la technique,

la figure 2 représente de manière simplifiée une forme d'exécution d'un convertisseur DC-DC avec une unité de gestion des temps d'ouverture et fermeture de commutateurs pour la croissance et la décroissance du courant à travers une inductance du convertisseur selon l'invention, et

la figure 3 représente des graphiques de la forme du courant traversant l'inductance et des signaux de commande pour l'adaptation des temps de croissance et décroissance du courant de l'inductance du convertisseur DC-DC selon l'invention.

Dans la description suivante, tous les éléments du convertisseur DC-DC fonctionnant en mode discontinu, qui sont bien connus de l'homme du métier dans ce domaine technique ne seront relatés que de manière simplifiée. Il est fait principalement référence à un convertisseur Boost, même si un autre type de convertisseur peut être aussi prévu avec l'adaptation des temps de croissance et décroissance du courant à travers l'inductance selon l'invention.

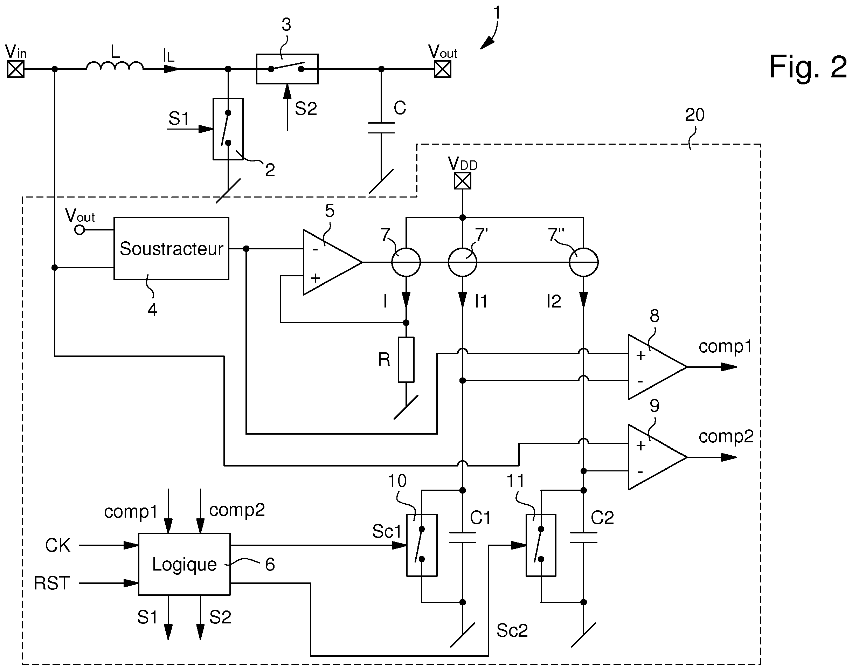

A la figure 2, il est représenté schématiquement un convertisseur DC-DC du type Boost 1, c'est-à-dire un convertisseur élévateur de tension avec un niveau de la tension de sortie Vout supérieur au niveau de la tension d'entrée continue Vin. Cette tension d'entrée Vin peut provenir d'une batterie ou d'une cellule solaire, qui ne sont pas représentées. Dans le cas d'une cellule solaire, la tension en entrée peut être de l'ordre de 0.6 V, alors que la tension de sortie peut être de l'ordre de 3 V, mais d'autres valeurs peuvent être envisagées. Un condensateur C de stockage de la tension de sortie Vout est relié à la sortie du convertisseur DC-DC 1. Ce condensateur C peut aussi être connecté en parallèle à la sortie à une résistance de charge non représentée, ce qui peut définir un composant de filtrage.

Le convertisseur DC-DC comprend notamment une inductance L comme élément réactif, un premier commutateur 2 contrôlé par un premier signal de commande S1 et un second commutateur 3 contrôlé par un second signal de commande S2. Les signaux de commandes sont générés par une unité de gestion de commutation 20 expliquée ci-après avec un contrôle du temps d'enclenchement ou de fermeture analogiquement des premier et second commutateurs 2 et 3. Dans une seconde phase d'asservissement du convertisseur DC-DC, le temps d'enclenchement du second commutateur 3 est déterminé par calcul en fonction du temps d'enclenchement du premier commutateur 2 de la première phase.

Dans ce convertisseur DC-DC, on peut définir la relation entre le courant $I_L$ traversant l'inductance L et la tension $U_L$. Cette relation est définie par l'équation $U_L = L \cdot (dI_L/dt)$. Comme la tension $U_L$ est de manière générale constante, le courant $I_L$ traversant l'inductance L est linéairement croissant ou décroissant. Cette tension $U_L$ peut être la tension d'entrée Vin. Ainsi, le temps t1 pendant lequel le premier commutateur 2 est rendu conducteur, c'est-à-dire laissant passer le courant croissant à travers l'inductance L, est défini par l'équation t1 = L·$I_L$/Vin. Cette tension $U_L$ peut être aussi la différence entre la tension de sortie Vout et la tension d'entrée Vin. Ainsi, le temps t2 pendant lequel le second commutateur 3 est rendu conducteur, c'est-à-dire laissant passer le courant décroissant à travers l'inductance L, est défini par l'équation t2 = L·$I_L$/(Vout-Vin). Il est donc possible de déterminer le temps t2 sur la base du temps t1 par l'équation t2 = t1·(Vin/(Vout-Vin)) dans un cas idéal.

Pour déterminer les premier et second temps d'enclenchement t1 et t2 des deux commutateurs 2 et 3, l'unité de gestion de commutation 20 comprend un circuit de conversion tension-courant. Ce circuit de conversion tension-courant est prévu pour convertir en courant une tension de comparaison, qui est la différence entre la tension de sortie Vout et la tension d'entrée Vin. Un premier courant I1 est prévu pour charger un premier condensateur C1 pour déterminer le premier temps d'enclenchement t1 et un second courant I2 est prévu pour charger un second condensateur C2 pour déterminer le second temps d'enclenchement t2. Cette différence de tension Vout-Vin peut être fournie par un soustracteur 4 de l'unité de gestion de commutation 20. Ce soustracteur 4 reçoit en entrée la tension d'entrée Vin et la tension de sortie Vout. La différence de tension Vout-Vin doit être positive pour opérer la conversion tension-courant. Pour un convertisseur de type Buck, cela nécessite d'effectuer la différence de tension Vin-Vout.

Le circuit de conversion tension-courant comprend un amplificateur-comparateur 5, dont une première entrée reçoit la différence de tension Vout-Vin et une seconde entrée est reliée à une résistance R. La sortie de l'amplificateur-comparateur 5 commande un miroir de courant 7, 7', 7", dont une première branche est reliée à la résistance R pour déterminer le courant I, I1, I2 dans chaque branche du miroir de courant. Le courant de base I dans la première branche est donc défini par l'équation I = (Vout-Vin)/R. Un premier courant miroité I1 dans une seconde branche 7' du miroir de courant permet de charger un premier condensateur C1 de l'unité de gestion de commutation 20 pour déterminer le premier temps d'enclenchement t1 du premier commutateur 2. Un second courant miroité I2 dans une troisième branche 7" du miroir de courant permet de charger un second condensateur C2 de l'unité de gestion de commutation 20 pour déterminer le second temps d'enclenchement t2 du second commutateur 3.

Pour ce convertisseur DC-DC du type Boost 1, la résistance R est reliée à la borne de masse, alors que le miroir de courant est relié à une borne de tension positive $V_{DD}$, qui peut être la tension de sortie Vout. La différence de tension Vout-Vin est fournie à l'entrée négative de l'amplificateur-comparateur 5, alors que le noeud de connexion de la résistance R à la première branche 7 du miroir de courant est relié à l'entrée positive de l'amplificateur-comparateur 5.

De préférence le miroir de courant est composé dans chaque branche 7, 7', 7" d'un transistor du type PMOS. La source de chaque transistor PMOS est reliée à la borne de tension positive $V_{DD}$. La grille de chaque transistor PMOS est reliée à la sortie de l'amplificateur-comparateur 5 pour être commandée par le signal de sortie de l'amplificateur-comparateur 5. Le drain du premier transistor PMOS est relié à la résistance R et à l'entrée positive de l'amplificateur-comparateur 5. Le drain du second transistor PMOS est relié au premier condensateur C1 et le drain du troisième transistor PMOS est relié au second condensateur C2. Chaque condensateur C1 et C2 est relié à la borne de masse.

Pour la détermination des premier et second temps d'enclenchement t1 et t2 des premier et second commutateurs 2 et 3, les condensateurs C1 et C2 sont initialement déchargés. Aucune tension sur les électrodes des condensateurs ne subsiste avant chaque détermination des premier et second temps d'enclenchement. Pour ce faire, un troisième commutateur 10 est relié et placé en parallèle du premier condensateur C1, et un quatrième commutateur 11 est relié et placé en parallèle du second condensateur C2. Le troisième commutateur 10 est commandé par un troisième signal de commande Sc1, alors que le quatrième commutateur 11 est commandé par un quatrième signal de commande Sc2. Les troisième et quatrième commutateurs 10 et 11 de l'unité de gestion de commutation 20 sont dans un état fermé pour décharger les deux condensateurs C1 et C2.

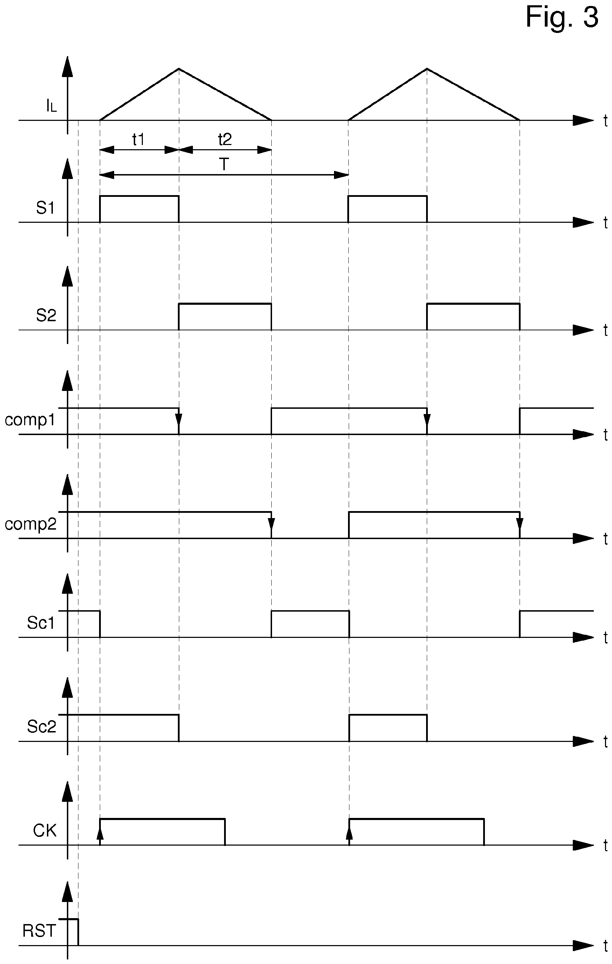

Les troisième et quatrième signaux de commande Sc1 et Sc2 sont fournis par un circuit logique 6 de l'unité de gestion de commutation 20. Ce circuit logique 6 est cadencé par un signal de cadencement CK d'un oscillateur du convertisseur pour définir chaque cycle d'asservissement du convertisseur DC-DC en mode discontinu comme expliqué ci-après en référence à la figure 3. Ce circuit logique 6 fournit également les premier et second signaux S1 et S2 pour commander alternativement les premier et second commutateurs 2 et 3.

Pour la détermination du premier temps d'enclenchement t1 de fermeture du premier commutateur 2, le courant I1 dans la seconde branche du miroir de courant charge le premier condensateur C1, quand le signal de cadencement CK change d'état par exemple sur un flanc montant dudit signal CK. La fréquence du signal de cadencement est l'inverse de la période T de chaque cycle. Lors du changement d'état initial du signal de cadencement CK, le troisième commutateur 10 est ouvert par le troisième signal de commande Sc1, alors que le quatrième commutateur 11 est toujours dans un état fermé par le quatrième signal de commande Sc2. Le premier condensateur C1 se charge jusqu'à un premier seuil de tension. Dès le premier seuil de tension atteint, le circuit logique 6 est commandé pour ouvrir le quatrième commutateur 11 et laisser ouvert le troisième commutateur 10. Lors de ce changement, le premier commutateur 2 est ouvert par le premier signal de commande S1 du circuit logique 6, alors que le second commutateur 3 est fermé par le second signal de commande S2 du circuit logique 6.

Pour la détermination du second temps d'enclenchement t2 de fermeture du second commutateur 3, le courant I2 de la troisième branche du miroir de courant charge le second condensateur C2. Le second condensateur C2 se charge jusqu'à un second seuil de tension. Dès le second seuil de tension atteint, le circuit logique 6 est commandé pour fermer le troisième commutateur 10, alors que le quatrième commutateur 11 peut rester dans un état ouvert jusqu'au terme de la période T du cycle. Lors de ce changement, le second commutateur 3 est ouvert par le second signal de commande S2 du circuit logique 6, alors que le premier commutateur 2 est toujours ouvert jusqu'au terme de la période T du cycle.

Il est à noter que l'unité de gestion de commutation 20 peut comprendre encore un premier comparateur 8 pour comparer la tension sur le premier condensateur C1 en charge avec le premier seuil de tension, qui peut être le signal de sortie du soustracteur 4. Ce signal de sortie est la différence entre la tension de sortie Vout et la tension d'entrée Vin. Le signal de sortie du soustracteur 4 est fourni à l'entrée positive du premier comparateur 8, alors que le premier condensateur C1 est relié à l'entrée négative du premier comparateur 8. Le premier comparateur 8 fournit un premier signal de comparaison comp1 au circuit logique 6 pour commander le circuit logique 6 dès que la tension sur le premier condensateur C1 en charge atteint la différence de tension entre la tension de sortie Vout et la tension d'entrée Vin. Le changement d'état du premier signal de comparaison comp1 commande l'ouverture du premier commutateur 2 et la fermeture du second commutateur 3 par l'intermédiaire du circuit logique 6. Le quatrième commutateur 11 est également ouvert par ce premier signal de comparaison comp1, afin de débuter le second temps d'enclenchement du second commutateur 3.

L'unité de gestion de commutation 20 peut comprendre encore un second comparateur 9 pour comparer la tension sur le second condensateur C2 en charge avec le second seuil de tension, qui peut être la tension d'entrée Vin. La tension d'entrée Vin est fournie à l'entrée positive du second comparateur 9, alors que le second condensateur C2 est relié à l'entrée négative. Le second comparateur 9 fournit un second signal de comparaison comp2 au circuit logique 6 pour commander le circuit logique 6 dès que la tension sur le second condensateur C2 en charge atteint la tension d'entrée Vin. Le changement d'état du second signal de comparaison comp2 commande l'ouverture du second commutateur 3, alors que le premier commutateur 2 reste ouvert jusqu'au terme de la période du cycle T dans ce mode de fonctionnement discontinu. Le troisième commutateur 10 est par contre commandé pour être fermé par le troisième signal de commande Sc1, afin de décharger le premier condensateur C1 avant le début d'un nouveau cycle.

Comme expliqué ci-dessus, l'invention repose sur l'idée de définir un premier temps d'enclenchement t1 du premier commutateur 2. Ce premier temps t1 est défini par la valeur résistive de la résistance R et la valeur capacitive du premier condensateur C1. Le courant dans la première branche, c'est-à-dire dans le premier transistor PMOS est défini par l'équation I = (Vout-Vin)/R. Dans le cas où le premier courant miroité I1 dans la seconde branche 7' est identique au courant I, le premier temps d'enclenchement t1 du premier commutateur 2 est défini par l'équation t1 = C1·(Vout-Vin)/I, donc t1 = C1·R. Dans le cas où le second courant miroité I2 dans la troisième branche 7" est identique au courant I, le second temps d'enclenchement t2 peut être défini par l'équation t2 = C2·R·Vin/(Vout-Vin). Si en plus, les valeurs capacitives des deux condensateurs C1 et C2 sont identiques, on peut définir le second temps t2 sur la base du premier temps t1 par l'équation t2 = t1·Vin/(Vout-Vin).

Il est à noter encore qu'il peut être envisagé d'ajuster tout parasite dans le convertisseur DC-DC. Ces parasites concernent les valeurs ohmiques des commutateurs, la résistance de l'inductance, des erreurs de décalage des comparateurs et de l'amplificateur-comparateur, qui peut être un amplificateur opérationnel. Avec ces parasites, le temps optimal de commutation du second commutateur 3 est plus court que la valeur théorique susmentionnée. Il est possible d'ajuster les temps de commutation des premier et second commutateurs 2 et 3 en modifiant le rapport des valeurs capacitives des premier et second condensateurs C1 et C2 ou également en modifiant le rapport des courants du miroir de courant.

L'ajustement du second temps d'enclenchement t2 du second commutateur peut tenir compte des relations des capacités C1 et C2 et des courants I1 et 2 selon les formules suivantes :

$$N = C1/C2 \text{ et } M = I1/I2$$

$$t2 = (Vin/(Vout-Vin))·t1·M/N$$

Il est encore à noter que les premier et second condensateurs C1 et C2 peuvent être constitués de plusieurs condensateurs unitaires pour assurer un meilleur appariement des condensateurs. Il est aussi possible de prévoir de modifier la valeur des courants I1 et I2 par le nombre de transistors en parallèle dans chaque branche du miroir de courant.

Dans le convertisseur DC-DC, il est défini le temps d'enclenchement ou fermeture du premier commutateur 2, et le calcul de manière analogique du temps d'enclenchement ou fermeture du second commutateur 3. Il peut être prévu d'utiliser le principe de modulation de largeur d'impulsions en faisant varier le temps de fermeture du premier commutateur 2, et de ce fait également le temps de fermeture du second commutateur 3 avec une même fréquence du signal de cadencement CK. Il peut aussi être prévu de modifier la fréquence du signal de cadencement CK en fixant le temps de fermeture du premier commutateur 2 et successivement du second commutateur 3. Les temps de fermeture des premier et second commutateurs 2 et 3 sont définis ou calculé pour avoir au terme du second temps de fermeture un courant nul à travers l'inductance L.

Les premier, second, troisième et quatrième commutateurs 2, 3, 10, 11 peuvent être des transistors MOS. Il peut s'agir de quatre transistors NMOS, mais il peut être envisagé que le second commutateur 3 soit un transistor PMOS de manière à être commandé par un second signal S2 inversé. L'inductance L avec les premier et second commutateurs 2 et 3 peuvent être agencés comme représenté à la figure 1.

Dans une variante de réalisation, le convertisseur DC-DC peut être un convertisseur de type Buck. Dans ce cas de figure, il peut être repris intégralement l'unité de gestion de commutation pour commander les premier et second commutateurs. Cependant le soustracteur fourni un signal Vin-Vout sur la base duquel les courants I, I1 et I2 sont déterminés. Si la valeur capacitive C de tous les condensateurs est identique, le premier temps d'enclenchement t1 est défini par t1 = R·C. Le second temps d'enclenchement t2 est défini par t2 = R·C·(Vout/(Vin-Vout)) = t1·(Vout/(Vin-Vout)).

Pour mieux représenter l'agencement des différents signaux de commande ou de cadencement dans le convertisseur DC-DC dans le mode discontinu, on peut se référer à la figure 3. Initialement il est prévu un signal de mise à zéro RST appliqué au circuit logique 6. Généralement dans cet état de mise à zéro, au moins le circuit de conversion tension-courant avec le miroir de courant et les comparateurs sont désactivés. Cependant il est envisageable d'avoir les signaux de commande comp1, comp2, Sc1 et Sc2 dans un état haut. Initialement les troisième et quatrième commutateurs 10, 11 sont fermés, ce qui décharge les deux condensateurs C1, C2, ainsi les signaux de comparaison comp1 et comp2 sont bien à l'état haut.

Dès l'instant où le signal de cadencement CK change d'état, par exemple sur un flanc montant, le circuit logique 6 commande la fermeture du premier commutateur 2 par le premier signal de commande S1. Le troisième commutateur 10 est également ouvert par le troisième signal de commande Sc1. Dès cet instant, une charge en tension sur le premier condensateur C1 intervient jusqu'au terme du temps t1, qui correspond à l'instant où la tension sur le condensateur C1 devient supérieure à la différence de tension entre la tension de sortie Vout et la tension d'entrée Vin. Le premier signal de comparaison comp1 passe de l'état haut à l'état bas pour commander le circuit logique 6, afin d'ouvrir le premier commutateur 2 par le premier signal de commande S1 et fermer le second commutateur 3 par le second signal de commande S2. Le quatrième commutateur 11 est commandé par le quatrième signal de commande Sc2 afin d'être ouvert. Dès cet instant, le second condensateur C2 se charge jusqu'à atteindre le niveau de la tension d'entrée Vin ce qui détermine le second temps d'enclenchement t2. Le second signal de comparaison comp2 passe de l'état haut à l'état bas pour commander le circuit logique 6. Le circuit logique 6 commande l'ouverture du second commutateur 3 par le second signal de commande S2, tout en maintenant le premier commutateur 2 ouvert jusqu'au terme de la période T du cycle s'asservissement du convertisseur DC-DC. Le troisième commutateur 10 peut être fermé par le troisième signal de commande Sc1, alors que le quatrième commutateur peut rester ouvert jusqu'au début d'un cycle successif.

A partir de la description qui vient d'être faite, plusieurs variantes du convertisseur DC-DC fonctionnant en mode discontinu peuvent être conçues par l'homme du métier sans sortir du cadre de l'invention définie par les revendications. Le convertisseur DC-DC peut comprendre deux sorties avec une seule inductance comme élément réactif.

**Revendications**

1. Convertisseur DC-DC (1), qui comprend une inductance (L) en tant qu'élément réactif, au moins un premier commutateur (2) relié à l'inductance (L) et commandé par un premier signal de commande (S1) et au moins un second commutateur (3) relié à l'inductance (L) et commandé par un second signal de commande (S2), les premier et second commutateurs (2, 3) fonctionnant en alternance, pour fournir une tension de sortie Vout d'un niveau supérieur au niveau d'une tension d'entrée Vin, le convertisseur comprenant également une unité de gestion de commutation (20) des commutateurs pour déterminer un premier temps d'enclenchement du premier commutateur (2) durant lequel un courant croissant traverse l'inductance, et un second temps d'enclenchement du second commutateur (3) durant lequel un courant décroissant traverse l'inductance, l'unité de gestion de commutation (20) comprenant un circuit de conversion tension-courant pour convertir en courants une tension de comparaison, qui est la différence entre la tension de sortie Vout et la tension d'entrée Vin, les courants étant définis par la différence entre la tension de sortie Vout et la tension d'entrée Vin divisée par la valeur résistive R d'une résistance (R), **caractérisé en ce que** le circuit de conversion tension-courant est configuré pour fournir un premier courant I1 pour charger un premier condensateur (C1), qui est compris dans l'unité de gestion de commutation (20), jusqu'à un premier seuil de tension pour déterminer le premier temps d'enclenchement t1, qui est défini par la valeur résistive R de la résistance (R) et la valeur capacitive C1 du premier condensateur (C1) selon l'équation t1 = C1·R, et **en ce que** le circuit de conversion tension-courant est configuré pour fournir un second courant I2 pour charger un second condensateur (C2) de valeur capacitive C2, qui est compris dans l'unité de gestion de commutation (20), jusqu'à un second seuil de tension pour déterminer le second temps d'enclenchement t2, qui est défini sur la base de la détermination du premier temps d'enclenchement t1 selon l'équation t2 = (Vin/(Vout-Vin))·t1·M/N, où M est égal à I1/I2 et N est égal à C1/C2.

2. Convertisseur DC-DC (1), qui comprend une inductance (L) en tant qu'élément réactif, au moins un premier commutateur (2) relié à l'inductance (L) et commandé par un premier signal de commande (S1) et au moins un second commutateur (3) relié à l'inductance (L) et commandé par un second signal de commande (S2), les premier et second commutateurs (2, 3) fonctionnant en alternance, pour fournir une tension de sortie Vout d'un niveau inférieur au niveau d'une tension d'entrée Vin, le convertisseur comprenant également une unité de gestion de commutation (20) des commutateurs pour déterminer un premier temps d'enclenchement du premier commutateur (2) durant lequel un courant croissant traverse l'inductance, et un second temps d'enclenchement du second commutateur (3) durant lequel un courant décroissant traverse l'inductance, l'unité de gestion de commutation (20) comprenant un circuit de conversion tension-courant pour convertir en courants une tension de comparaison, qui est la différence entre la tension d'entrée Vin et la tension de sortie Vout, les courants étant définis par la différence entre la tension d'entrée Vin et la tension de sortie Vout divisée par la valeur résistive R d'une résistance (R), **caractérisé en ce que** le circuit de conversion tension-courant est configuré pour fournir un premier courant I1 pour charger un premier condensateur (C1), qui est compris dans l'unité de gestion de commutation (20), jusqu'à un premier seuil de tension pour déterminer le premier temps d'enclenchement t1, qui est défini par la valeur résistive R de la résistance (R) et la valeur capacitive C1 du premier condensateur (C1) selon l'équation t1 = C1·R, et **en ce que** le circuit de conversion tension-courant est configuré pour fournir un second courant I2 pour charger un second condensateur (C2) de valeur capacitive C2, qui est compris dans l'unité de gestion de commutation (20), jusqu'à un second seuil de tension pour déterminer le second temps d'enclenchement t2, qui est défini sur la base de la détermination du premier temps d'enclenchement t1 selon l'équation t2 = (Vout/(Vin-Vout))·t1·M/N, où M est égal à I1/I2 et N est égal à C1/C2.

3. Convertisseur DC-DC (1) selon l'une des revendications 1 et 2, **caractérisé en ce que** le circuit de conversion tension-courant comprend un amplificateur-comparateur (5), dont une première entrée reçoit la différence entre la tension de sortie Vout et la tension d'entrée Vin ou la différence entre la tension d'entrée Vin et la tension de sortie Vout, et une seconde entrée est reliée à la résistance (R), et **en ce qu'**une sortie de l'amplificateur-comparateur (5) commande un miroir de courant (7, 7', 7''), dont une première branche est reliée en série à la résistance (R) pour déterminer un courant de base (I) à miroiter dans le miroir de courant pour définir le premier courant I1 dans une seconde branche (7') et le second courant I2 dans une troisième branche (7'') du miroir de courant.

4. Convertisseur DC-DC (1) selon la revendication 3, **caractérisé en ce que** la différence entre la tension de sortie Vout et la tension d'entrée Vin ou la différence entre la tension d'entrée Vin et la tension de sortie Vout est fournie à une entrée négative de l'amplificateur-comparateur (5), et **en ce qu'**un noeud de connexion de la résistance (R) à la première branche (7) du miroir de courant est relié à une entrée positive de l'amplificateur-comparateur (5), la résistance (R) étant reliée à une borne de masse.

5. Convertisseur DC-DC (1) selon la revendication 4, **caractérisé en ce que** le miroir de courant est composé de transistors de type PMOS disposés en parallèle, une source de chaque transistor étant reliée à une borne de tension positive, une grille de chaque transistor étant reliée à la sortie de l'amplificateur-comparateur (5), **en ce qu'**un drain d'au moins un premier transistor PMOS dans la première branche est relié à la résistance et à l'entrée positive de l'amplificateur-comparateur (5), **en ce qu'**un drain d'au moins un second transistor PMOS est relié au premier condensateur (C1) pour fournir un premier courant de charge I1, et **en ce qu'**un drain d'au moins un troisième transistor PMOS est relié au second condensateur (C2) pour fournir un second courant de charge I2.

6. Convertisseur DC-DC (1) selon l'une des revendications précédentes, **caractérisé en ce que** l'unité de gestion de commutation (20) comprend un soustracteur (4) recevant à une premier entrée la tension de sortie Vout et à une seconde entrée la tension d'entrée Vin pour fournir un signal de sortie, qui est la différence entre la tension de sortie Vout et la tension d'entrée Vin ou la différence entre la tension d'entrée Vin et la tension de sortie Vout.

7. Convertisseur DC-DC (1) selon l'une des revendications précédentes, **caractérisé en ce que** dans l'unité de gestion de commutation (20), un troisième commutateur (10) est relié et placé en parallèle du premier condensateur (C1), le troisième commutateur (10) étant commandé par un troisième signal de commande (Sc1) fourni par un circuit logique (6) du convertisseur, le troisième commutateur étant dans un état fermé pour décharger le premier condensateur (C1) et dans un état ouvert pour charger le premier condensateur (C1) pour déterminer le premier temps d'enclenchement t1, et **en ce qu'**un quatrième commutateur (11) est relié et placé en parallèle du second condensateur (C2), le quatrième commutateur (11) étant commandé par un quatrième signal de commande (Sc2) fourni par le circuit logique (6), le quatrième commutateur étant dans un état fermé pour décharger le second condensateur (C2) et dans un état ouvert pour charger le second condensateur (C2) pour déterminer le second temps d'enclenchement t2.

8. Convertisseur DC-DC (1) selon l'une des revendications précédentes, **caractérisé en ce que** l'unité de gestion de commutation (20) comprend un premier comparateur (8) pour comparer le premier seuil de tension avec la tension sur le premier condensateur (C1) en phase de charge pour déterminer le premier temps d'enclenchement du premier commutateur (2), un premier signal de comparaison (comp1) étant fourni par le premier comparateur (8) pour commander un circuit logique (6) du convertisseur, afin de maintenir fermé le premier commutateur (2), quand la tension sur le premier condensateur est en-dessous du premier seuil de tension et ouvrir le premier commutateur (2), quand la tension sur le premier condensateur est en-dessus du premier seuil de tension.

9. Convertisseur DC-DC (1) selon la revendication 1, **caractérisé en ce que** le premier seuil de tension est la différence entre la tension de sortie Vout et la tension d'entrée Vin.

10. Convertisseur DC-DC (1) selon l'une des revendications précédentes, **caractérisé en ce que** l'unité de gestion de commutation (20) comprend un second comparateur (9) pour comparer le second seuil de tension avec la tension sur le second condensateur (C2) en phase de charge pour déterminer le second temps d'enclenchement du second commutateur (3), un second signal de comparaison (comp2) étant fourni par le second comparateur (9) pour commander un circuit logique (6) du convertisseur, afin de maintenir fermé le second commutateur (3), quand la tension sur le second condensateur est en-dessous du second seuil de tension et ouvrir le second commutateur (3), quand la tension sur le second condensateur est en-dessus du second seuil de tension.

11. Convertisseur DC-DC (1) selon la revendication 1, **caractérisé en ce que** le second seuil de tension est la tension d'entrée Vin.

12. Convertisseur DC-DC (1) selon la revendication 3, **caractérisé en ce que** le courant de base est identique au second courant I2, **en ce que** la capacité C1 du premier condensateur (C1) est égale à la capacité C2 du second condensateur (C2).

13. Convertisseur DC-DC (1) selon l'une des revendications 1 et 2, **caractérisé en ce que** l'unité de gestion de commutation (20) comprend un circuit logique (6), qui est cadencé par un signal de cadencement (CK) d'un oscillateur du convertisseur, afin de définir chaque cycle d'asservissement du convertisseur DC-DC, et qui fournit les premier et second signaux de commande (S1, S2) aux premier et second commutateurs (2, 3).

14. Procédé de mise en action d'un convertisseur DC-DC (1) selon la revendication 1, **caractérisé en ce que** le procédé comprend dans chaque cycle d'asservissement du convertisseur DC-DC, des étapes consistant à :

- fermer le premier commutateur (2) par le premier signal de commande (S1) avec le second commutateur (3) dans un état ouvert, un premier courant I1 étant fourni par le circuit de conversion tension-courant pour charger le premier condensateur (C1) jusqu'à un premier seuil de tension pour déterminer le premier temps d'enclenchement t1 du premier commutateur, le temps t1 étant défini par la valeur résistive R de la résistance (R) et la valeur capacitive C1 du premier condensateur (C1) selon l'équation t1 = C1·R, et
- au terme du premier temps d'enclenchement, fermer le second commutateur (3) par le second signal de commande (S2) avec le premier commutateur (2) commandé pour être ouvert, un second courant I2 étant fourni par le circuit de conversion tension-courant pour charger le second condensateur (C2) de valeur capacitive C2 jusqu'à un second seuil de tension pour déterminer le second temps d'enclenchement t2 du second commutateur, le temps t2 étant défini sur la base de la détermination du premier temps d'enclenchement t1 selon l'équation t2 = (Vin/(Vout-Vin))·t1·M/N, où M est égal à I1/I2 et N est égal à C1/C2.

15. Procédé de mise en action d'un convertisseur DC-DC (1) selon la revendication 14, **caractérisé en ce que** le premier condensateur (C1) est chargé par le premier courant I1 pour déterminer le premier temps d'enclenchement t1 jusqu'à ce que la tension sur le premier condensateur (C1) atteigne le premier seuil de tension, qui est la différence entre la tension de sortie Vout et la tension d'entrée Vin.

16. Procédé de mise en action d'un convertisseur DC-DC (1) selon la revendication 14, **caractérisé en ce que** le second condensateur (C2) est chargé par le second courant I2 pour déterminer le second temps d'enclenchement t2 jusqu'à ce que la tension sur le second condensateur (C2) atteigne le second seuil de tension, qui est la tension d'entrée Vin.

**Patentansprüche**

1. Gleichspannungswandler (1), umfassend eine Induktivität (L) als reaktives Element, mindestens einen ersten Schalter (2), der mit der Induktivität (L) verbunden ist und durch ein erstes Steuersignal (S1) gesteuert wird, und mindestens einen zweiten Schalter (3), der mit der Induktivität (L) verbunden ist und durch ein zweites Steuersignal (S2) gesteuert wird, wobei der erste und der zweite Schalter (2, 3) abwechselnd arbeiten, um eine Ausgangsspannung Vout mit einem Pegel, der höher als der Pegel einer Eingangsspannung Vin ist, zu liefern, wobei der Wandler ferner eine Umschaltungssteuereinheit (20) für die Schalter umfasst, um eine erste Einschaltzeit des ersten Schalters (2), während der durch die Induktivität ein zunehmender Strom fließt, und eine zweite Einschaltzeit des zweiten Schalters (3), während der durch die Induktivität ein abnehmender Strom fließt, zu bestimmen, wobei die Umschaltungssteuereinheit (20) eine Spannung/Strom-Umsetzungsschaltung umfasst, um eine Vergleichsspannung, die die Differenz zwischen der Ausgangsspannung Vout und der Eingangsspannung Vin ist, in Ströme umzusetzen, wobei die Ströme durch die Differenz zwischen der Ausgangsspannung Vout und der Eingangsspannung Vin, dividiert durch den Widerstandswert R eines Widerstands (R) definiert sind,

   **dadurch gekennzeichnet, dass** die Spannung/Strom-Umsetzungsschaltung konfiguriert ist, einen ersten Strom I1 zu liefern, um einen ersten Kondensator (C1), der in der Umschaltungssteuereinheit (20) enthalten ist, bis zu einem ersten Spannungsschwellenwert zu laden, um die erste Einschaltzeit t1 zu bestimmen, die durch den Widerstandswert R des Widerstands (R) und durch den kapazitiven Wert C1 des ersten Kondensators (C1) gemäß der Gleichung t1 = C1 · R definiert ist, und dass die Spannung/Strom-Umsetzungsschaltung konfiguriert ist, einen zweiten Strom I2 zu liefern, um einen zweiten Kondensator (C2) mit kapazitivem Wert C2, der in der Umschaltungssteuereinheit (20) enthalten ist, bis zu einem zweiten Spannungsschwellenwert zu laden, um die zweite Einschaltzeit t2 zu bestimmen, die auf der Grundlage der Bestimmung der ersten Einschaltzeit t1 gemäß der Gleichung t2 = (Vin/(Vout - Vin)) · t1 · M/N definiert ist, wobei M gleich I1/I2 ist und N gleich C1/C2 ist.

2. Gleichspannungswandler (1), umfassend eine Induktivität (L) als reaktives Element, mindestens einen ersten Schalter (2), der mit der Induktivität (L) verbunden ist und durch ein erstes Steuersignal (S1) gesteuert wird, und mindestens einen zweiten Schalter (3), der mit der Induktivität (L) verbunden ist und durch ein zweites Steuersignal (S2) gesteuert wird, wobei der erste und der zweite Schalter (2, 3) abwechselnd arbeiten, um eine Ausgangsspannung Vout mit einem Pegel, der niedriger als der Pegel einer Eingangsspannung Vin ist, zu liefern, wobei der Wandler ferner eine Umschaltungssteuereinheit (20) für die Schalter umfasst, um eine erste Einschaltzeit des ersten Schalters (2), während der durch die Induktivität ein zunehmender Strom fließt, und eine zweite Einschaltzeit des zweiten Schalters (3), während der durch die Induktivität ein abnehmender Strom fließt, zu bestimmen, wobei die Umschaltungssteuereinheit (20) eine Spannung/Strom-Umsetzungsschaltung umfasst, um eine Vergleichsspannung, die die Differenz zwischen der Eingangsspannung Vin und der Ausgangsspannung Vout ist, in Ströme umzusetzen, wobei die Ströme durch die Differenz zwischen der Eingangsspannung Vin und der Ausgangsspannung Vout, dividiert durch den Widerstandswert R eines Widerstands (R) definiert sind,

   **dadurch gekennzeichnet, dass** die Spannung/Strom-Umsetzungsschaltung konfiguriert ist, einen ersten Strom I1 zum Laden eines ersten Kondensators (C1), der in der Umschaltungssteuereinheit (20) enthalten ist, bis zu einem ersten Spannungsschwellenwert zu laden, um die erste Einschaltzeit t1 zu bestimmen, die durch den Widerstandswert R des Widerstands (R) und den kapazitiven Wert C1 des ersten Kondensators (C1) gemäß der Gleichung t1 = C1 · R definiert ist, und dass die Spannung/Strom-Umsetzungsschaltung konfiguriert ist, einen zweiten Strom I2 zum Laden eines zweiten Kondensators (C2) mit kapazitivem Wert C2, der in der Umschaltungssteuereinheit (20) enthalten ist, bis zu einem zweiten Spannungsschwellenwert zu laden, um die zweite Einschaltzeit t2 zu bestimmen, die auf der Grundlage der Bestimmung der ersten Einschaltzeit t1 gemäß der Gleichung t2 = (Vout/(Vin - Vout)) · t1 · M/N definiert ist, wobei M gleich I1/I2 ist und N gleich C1/C2 ist.

3. Gleichspannungswandler (1) nach einem der Ansprüche 1 und 2, **dadurch gekennzeichnet, dass** die Spannung/Strom-Umsetzungsschaltung einen Verstärker-Komparator (5) umfasst, dessen erster Eingang die Differenz zwischen der Ausgangsspannung Vout und der Eingangsspannung Vin oder die Differenz zwischen der Eingangsspannung Vin und der Ausgangsspannung Vout empfängt und dessen zweiter Eingang mit dem Widerstand (R) verbunden ist, und dass ein Ausgang des Verstärker-Komparators (5) einen Stromspiegel (7, 7', 7") steuert, von dem ein erster Zweig mit dem Widerstand (R) in Reihe geschaltet ist, um einen Basisstrom (I) zu bestimmen, der in dem Stromspiegel zu spiegeln ist, um den ersten Strom (I1) in einem zweiten Zweig (7') zu definieren und den zweiten Strom I2 in einem dritten Zweig (7") des Stromspiegels zu definieren.

4.  Gleichspannungswandler (1) nach Anspruch 3, **dadurch gekennzeichnet, dass** die Differenz zwischen der Ausgangsspannung Vout und der Eingangsspannung Vin oder die Differenz zwischen der Eingangsspannung Vin und der Ausgangsspannung Vout an einen negativen Eingang des Verstärker-Komparators (5) geliefert wird, und dass ein Verbindungsknoten des Widerstands (R) mit dem ersten Zweig (7) des Stromspiegels mit einem positiven Eingang des Verstärker-Komparators (5) verbunden ist, wobei der Widerstand (R) mit einem Masseanschluss verbunden ist.

5.  Gleichspannungswandler (1) nach Anspruch 4, **dadurch gekennzeichnet, dass** der Stromspiegel aus Transistoren des PMOS-Typs aufgebaut ist, die parallelgeschaltet sind, wobei eine Source jedes Transistors mit einem positiven Spannungsanschluss verbunden ist und ein Gate jedes Transistors mit dem Ausgang des Verstärker-Komparators (5) verbunden ist, dass ein Drain zumindest eines ersten PMOS-Transistors in dem ersten Zweig mit dem Widerstand und mit dem positiven Eingang des Verstärker-Komparators (5) verbunden ist, dass ein Drain zumindest eines zweiten PMOS-Transistors mit dem ersten Kondensator (C1) verbunden ist, um einen ersten Ladestrom I1 zu liefern, und dass ein Drain zumindest eines dritten PMOS-Transistors mit dem zweiten Kondensator (C2) verbunden ist, um einen zweiten Ladestrom I2 zu liefern.

6.  Gleichspannungswandler (1) nach einem der vorhergehenden Ansprüche, **dadurch gekennzeichnet, dass** die Umschaltungssteuereinheit (20) einen Subtrahierer (4) umfasst, der an einem ersten Eingang die Ausgangsspannung Vout und an einem zweiten Eingang die Eingangsspannung Vin empfängt, um ein Ausgangssignal zu liefern, das die Differenz zwischen der Ausgangsspannung Vout und der Eingangsspannung Vin oder die Differenz zwischen der Eingangsspannung Vin und der Ausgangsspannung Vout ist.

7.  Gleichspannungswandler (1) nach einem der vorhergehenden Ansprüche, **dadurch gekennzeichnet, dass** in der Umschaltungssteuereinheit (20) ein dritter Schalter (10) mit dem ersten Kondensator (C1) verbunden und hierzu parallelgeschaltet ist, wobei der dritte Schalter (10) durch ein drittes Steuersignal (Sc1) gesteuert wird, das von einer Logikschaltung (6) des Wandlers geliefert wird, wobei der dritte Schalter in einem geschlossenen Zustand ist, um den ersten Kondensator (C1) zu entladen, und in einem offenen Zustand ist, um den ersten Kondensator (C1) zu laden, um die erste Einschaltzeit t1 zu bestimmen, und dass ein vierter Schalter (11) mit dem zweiten Kondensator (C2) verbunden und hierzu parallelgeschaltet ist, wobei der vierte Schalter (11) durch ein viertes Steuersignal (Sc2) gesteuert wird, das von der Logikschaltung (6) geliefert wird, wobei der vierte Schalter in einem geschlossenen Zustand ist, um den zweiten Kondensator (C2) zu entladen, und in einem offenen Zustand ist, um den zweiten Kondensator (C2) zu laden, um die zweite Einschaltzeit (t2) zu bestimmen.

8.  Gleichspannungswandler nach einem der vorhergehenden Ansprüche, **dadurch gekennzeichnet, dass** die Umschaltungssteuereinheit (20) einen ersten Komparator (8) umfasst, um den ersten Spannungsschwellenwert mit der Spannung an dem ersten Kondensator (C1), der in der Ladephase ist, zu vergleichen, um die erste Einschaltzeit des ersten Schalters (2) zu bestimmen, wobei ein erstes Vergleichssignal (comp1) von dem ersten Komparator (8) geliefert wird, um eine Logikschaltung (6) des Wandlers zu steuern, um den ersten Schalter (2) geschlossen zu halten, wenn die Spannung an dem ersten Kondensator unter dem ersten Spannungsschwellenwert liegt, und um den ersten Schalter (2) zu öffnen, wenn die Spannung an dem ersten Kondensator über dem ersten Spannungsschwellenwert liegt.

9.  Gleichspannungswandler (1) nach Anspruch 1, **dadurch gekennzeichnet, dass** der erste Spannungsschwellenwert die Differenz zwischen der Ausgangsspannung Vout und der Eingangsspannung Vin ist.

10. Gleichspannungswandler (1) nach einem der vorhergehenden Ansprüche, **dadurch gekennzeichnet, dass** die Umschaltungssteuereinheit (20) einen zweiten Komparator (9) umfasst, um den zweiten Spannungsschwellenwert mit der Spannung an dem zweiten Kondensator (C2), der in der Ladephase ist, zu vergleichen, um die zweite Einschaltzeit des zweiten Schalters (3) zu bestimmen, wobei ein zweites Vergleichssignal (comp2) von dem zweiten Komparator (9) geliefert wird, um eine Logikschaltung (6) des Wandlers zu steuern, um den zweiten Schalter (3) geschlossen zu halten, wenn die Spannung an dem zweiten Kondensator unter dem zweiten Spannungsschwellenwert liegt, und um den zweiten Schalter (3) zu öffnen, wenn die Spannung an dem zweiten Kondensator über dem zweiten Spannungsschwellenwert liegt.

11. Gleichspannungswandler (1) nach Anspruch 1, **dadurch gekennzeichnet, dass** der zweite Spannungsschwellenwert die Eingangsspannung Vin ist.

**12.** Gleichspannungswandler (1) nach Anspruch 3, **dadurch gekennzeichnet, dass** der Basisstrom mit dem zweiten Strom I2 übereinstimmt und dass die Kapazität C1 des ersten Kondensators (C1) gleich der Kapazität C2 des zweiten Kondensators (C2) ist.

**13.** Gleichspannungswandler (1) nach einem der Ansprüche 1 und 2, **dadurch gekennzeichnet, dass** die Umschaltungssteuereinheit (20) eine Logikschaltung (6) umfasst, die durch ein Taktsignal (CK) eines Oszillators des Wandlers getaktet wird, um jeden Regulierungszyklus des Gleichspannungswandlers zu definieren, und die das erste und das zweite Steuersignal (S1, S2) an den ersten und den zweiten Schalter (2, 3) liefert.

**14.** Verfahren zum Betreiben eines Gleichspannungswandlers (1) nach Anspruch 1, **dadurch gekennzeichnet, dass** das Verfahren in jedem Regulierungszyklus des Gleichspannungswandlers Schritte umfasst, die darin bestehen:

    - den ersten Schalter (2) durch das erste Steuersignal (S1) zu schließen, wenn der zweite Schalter (3) in einem offenen Zustand ist, wobei ein erster Strom I1 von der Spannung/Strom-Umsetzungsschaltung geliefert wird, um den ersten Kondensator (C1) bis zu einem ersten Spannungsschwellenwert zu laden, um die erste Einschaltzeit t1 des ersten Schalters zu bestimmen, wobei die Zeit t1 durch den Widerstandswert R des Widerstands (R) und durch den kapazitiven Wert C1 des ersten Kondensators (C1) gemäß der Gleichung t1 = C1 · R definiert ist, und

    - am Ende der ersten Einschaltzeit den zweiten Schalter (3) durch das zweite Steuersignal (S2) zu schließen, wobei der erste Schalter (2) in den offenen Zustand gesteuert wird, wobei ein zweiter Strom I2 von der Spannung/Strom-Umsetzungsschaltung geliefert wird, um den zweiten Kondensator (C2) mit kapazitivem Wert C2 bis zu einem zweiten Spannungsschwellenwert zu laden, um die zweite Einschaltzeit t2 des zweiten Schalters zu bestimmen, wobei die Zeit t2 auf der Grundlage der Bestimmung der ersten Einschaltzeit t1 gemäß der Gleichung t2 = (Vin/(Vout - Vin)) · t1 · M/N definiert ist, wobei M gleich I1/I2 ist und N gleich C1/C2 ist.

**15.** Verfahren zum Betreiben eines Gleichspannungswandlers (1) nach Anspruch 14, **dadurch gekennzeichnet, dass** der erste Kondensator (C1) durch den ersten Strom I1 zum Bestimmen der ersten Einschaltzeit geladen wird, bis die Spannung an dem ersten Kondensator C1 den ersten Spannungsschwellenwert erreicht, der die Differenz zwischen der Ausgangsspannung Vout und der Eingangsspannung Vin ist.

**16.** Verfahren zum Betreiben eines Gleichspannungswandlers (1) nach Anspruch 14, **dadurch gekennzeichnet, dass** der zweite Kondensator (C2) durch den zweiten Strom I2 zum Bestimmen der zweiten Einschaltzeit t2 geladen wird, bis die Spannung an dem zweiten Kondensator (C2) den zweiten Spannungsschwellenwert erreicht, der die Eingangsspannung Vin ist.

**Claims**

**1.** DC-DC converter (1), which includes an inductor (L) as reactive component, at least a first switch (2) connected to the inductor (L) and controlled by a first control signal (S1), and at least a second switch (3) connected to the inductor (L) and controlled by a second control signal (S2), the first and second switches (2, 3) operating alternately to supply an output voltage Vout of a higher level than the level of an input voltage Vin, the converter also including a switching control unit (20) for the switches for determining a first switching time of the first switch (2) during which an increasing current flows through the inductor, and a second switching time of the second switch (3) during which a decreasing current flows through the inductor, the switching control unit (20) including a voltage-current conversion circuit for converting into currents a comparison voltage, which is the difference between the output voltage Vout and the input voltage Vin, the currents being defined by the difference between the output voltage Vout and the input voltage Vin divided by the resistive value R of a resistor (R),

**characterized in that** the voltage-current conversion circuit is configured to supply a first current I1 for charging a first capacitor (C1), which is included in the switching control unit (20), to a first voltage threshold to determine the first switching time t1, which is defined by the resistive value R of the resistor (R) and the capacitive value C1 of the first capacitor (C1) according to the equation t1 = C1·R, and **in that** the voltage-current conversion circuit is configured to supply a second current I2 for charging a second capacitor (C2) of a capacitive value C2, which is included in the switching control unit (20), to a second voltage threshold to determine the second switching time t2, which is defined on the basis of the determination of the first switching time t1 according to the equation t2 = (Vin/(Vout-Vin))·t1·M/N, where M is equal to I1/I2 and N is equal to C1/C2.

**2.** DC-DC converter (1), which includes an inductor (L) as reactive component, at least a first switch (2) connected to the inductor (L) and controlled by a first control signal (S1), and at least a second switch (3) connected to the inductor (L) and controlled by a second control signal (S2), the first and second switches (2, 3) operating alternately to supply an output voltage Vout of a lower level than the level of an input voltage Vin, the converter also including a switching control unit (20) for the switches for determining a first switching time of the first switch (2) during which an increasing current flows through the inductor, and a second switching time of the second switch (3) during which a decreasing current flows through the inductor, the switching control unit (20) including a voltage-current conversion circuit for converting into currents a comparison voltage, which is the difference between the input voltage Vin and the output voltage Vout, the currents being defined by the difference between the input voltage Vin and the output voltage Vout divided by the resistive value R of a resistor (R),

characterized in that the voltage-current conversion circuit is configured to supply a first current 11 for charging a first capacitor (C1), which is included in the switching control unit (20), to a first voltage threshold to determine the first switching time t1, which is defined by the resistive value R of the resistor (R) and the capacitive value C1 of the first capacitor (C1) according to the equation $t1 = C1 \cdot R$, and in that the voltage-current conversion circuit is configured to supply a second current 12 for charging a second capacitor (C2) of a capacitive value C2, which is included in the switching control unit (20), to a second voltage threshold to determine the second switching time t2, which is defined on the basis of the determination of the first switching time t1 according to the equation $t2 = (Vout/(Vin-Vout)) \cdot t1 \cdot M/N$, where M is equal to 11/12 and N is equal to C1/C2.

3. DC-DC converter (1) according to one of claims 1 and 2, characterized in that the voltage-current conversion circuit includes an amplifier-comparator (5), whose first input receives the difference between the output voltage Vout and the input voltage Vin, and whose second input is connected to a resistor (R), and in that an output of the amplifier-comparator (5) controls a current mirror (7, 7', 7"), whose first branch is series connected to the resistance (R) for determining a basic current (I) to be mirrored in the current mirror to define the first current 11 in a second branch (7') and the second current 12 in a third branch (7") of the current mirror.

4. DC-DC converter (1) according to claim 3, characterized in that the difference between the output voltage Vout and the input voltage Vin or the difference between the input voltage Vin and the output voltage Vout is supplied to a negative input of the amplifier-comparator (5), and in that a node connecting the resistor (R) to the first branch (7) of the current mirror is connected to a positive input of the amplifier-comparator (5), the resistor (R) being connected to an earth terminal.

5. DC-DC converter (1) according to claim 4, characterized in that the current mirror is formed of PMOS transistors arranged in parallel, a source of each transistor being connected to a positive voltage terminal, a gate of each transistor being connected to the output of the amplifier-comparator (5), in that a drain of at least a first PMOS transistor in the first branch is connected to the resistor and to the positive input of the amplifier-comparator (5), in that a drain of at least a second PMOS transistor is connected to the first capacitor (C1) to supply a first charging current 11, and in that a drain of at least a third PMOS transistor is connected to the second capacitor (C2) to supply a second charging current 12.

6. DC-DC converter (1) according to any of the preceding claims, characterized in that the switching control unit (20) includes a subtractor (4) receiving the output voltage Vout at a first input and the input voltage Vin at a second input in order to supply an output signal, which is the difference between the output voltage Vout and the input voltage Vin or the difference between the input voltage Vin and the output voltage Vout.

7. DC-DC converter (1) according to any of the preceding claims, characterized in that in the switching control unit (20), a third switch (10) is connected and placed in parallel to the first capacitor (C1), the third switch (10) being controlled by a third control signal (Sc1) supplied by a logic circuit (6) of the converter, the third switch being in a closed state for discharging the first capacitor (C1) and in an open state for charging the first capacitor (C1) to determine the first switching time t1, and in that a fourth switch (11) is connected and placed in parallel to the second capacitor (C2), the fourth switch (11) being controlled by a fourth control signal (Sc2) supplied by the logic circuit (6), the fourth switch being in a closed state for discharging the second capacitor (C2) and in an open state for charging the second capacitor (C2) to determine the second switching time t2.

8. DC-DC converter (1) according to any of the preceding claims, characterized in that the switching control unit (20) includes a first comparator (8) for comparing the first voltage threshold to the voltage across the first capacitor (C1) in charging phase to determine the first switching time of the first switch (2), a first comparison signal (comp1) being supplied by the first comparator (8) to control a logic circuit (6) of the converter, in order to keep the first switch (2) closed, when the voltage across the first capacitor is below the first voltage threshold and to open the first switch (2), when the voltage across the first capacitor is above the first voltage threshold.

9.  DC-DC converter (1) according to claim 1, **characterized in that** the first voltage threshold is the difference between the output voltage Vout and the input voltage Vin.

10. DC-DC converter (1) according to any of the preceding claims, **characterized in that** the switching control unit (20) includes a second comparator (9) for comparing the second voltage threshold to the voltage across the second capacitor (C2) in charging phase to determine the second switching time of the second switch (3), a second comparison signal (comp2) being supplied by the second comparator (9) to control a logic circuit (6) of the converter, in order to keep the second switch (3) closed when the voltage across the second capacitor is below the second voltage threshold and to open the second switch (3) when the voltage across the second capacitor is above the second voltage threshold.

11. DC-DC converter (1) according to claim 1, **characterized in that** the second voltage threshold is the input voltage Vin.

12. DC-DC converter (1) according to claim 3, **characterized in that** the basic current is identical to the second current 12, **in that** the capacitance C1 of the first capacitor (C1) is equal to the capacitance C2 of the second capacitor (C2).

13. DC-DC converter (1) according to one of claims 1 and 2, **characterized in that** the switching control unit (20) includes a logic circuit (6), which is clocked by a clocking signal (CK) from an oscillator of the converter, so as to define each control cycle of the DC-DC converter, and which supplies the first and second control signals (S1, S2) to the first and second switches (2, 3).

14. Method of actuating a DC-DC converter (1) according to claim 1, **characterized in that**, in each control cycle of the DC-DC converter, the method includes the steps consisting in:

> - closing the first switch (2) via the first control signal (S1) with the second switch (3) in an open state, a first current 11 being supplied by the voltage-current conversion circuit for charging the first capacitor (C1) to a first voltage threshold to determine the first switching time t1 of the first switch, the time t1 being defined by the resistive value R of the resistor (R) and the capacitive value C1 of the first capacitor (C1) according to the equation t1 = C1·R, and
> - at the end of the first switching time, closing the second switch (3) via the second control signal (S2) with the first switch (2) controlled to be opened, a second current 12 being supplied by the voltage-current conversion circuit for charging the second capacitor (C2) of the capacitive value C2 to a second voltage threshold to determine the second switching time t2 of the second switch, the time t2 being defined on the basis of the determination of the first switching time t1 according to the equation t2 = (Vin/(Vout-Vin))·t1·M/N, where M is equal to 11/12 and N is equal to C1/C2.

15. Method of actuating a DC-DC converter (1) according to claim 14, **characterized in that** the first capacitor (C1) is charged by the first current 11 to determine the first switching time t1 until the voltage across the first capacitor (C1) attains the first voltage threshold, which is the difference between the output voltage Vout and the input voltage Vin.

16. Method of actuating a DC-DC converter (1) according to claim 14, **characterized in that** the second capacitor (C2) is charged by the second current 12 to determine the second switching time t2 until the voltage across the second capacitor (C2) attains the second voltage threshold, which is the input voltage Vin.

Fig. 1

Fig. 2

# Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2104213 B1

- US 6151233 A